(19) Europäisches Patentamt
European Patent Office
Office européen des brevets

(11) Veröffentlichungsnummer: **0 370 423 A2**

(12) # EUROPÄISCHE PATENTANMELDUNG

(21) Anmeldenummer: **89121409.0**

(51) Int. Cl.5: **H04M 3/30, H04M 1/24**

(22) Anmeldetag: **18.11.89**

(30) Priorität: **21.11.88 DE 3839266**

(43) Veröffentlichungstag der Anmeldung: **30.05.90 Patentblatt 90/22**

(84) Benannte Vertragsstaaten: **AT BE CH DE ES FR GB GR IT LI NL SE**

(71) Anmelder: **Walter Rose GmbH & Co. KG**
**Lütkenheider Strasse 2**
**D-5800 Hagen 1(DE)**

(72) Erfinder: **Fremgen, Dieter**
**Hans-Böckler-Strasse 46**
**D-5603 Wülfrath(DE)**
Erfinder: **Pokorny, Helmut**
**Schumannstrasse 29**
**D-5800 Hagen 1(DE)**
Erfinder: **Kohlhaas, Martin**
**Unterdorfstrasse 16F**
**D-5840 Schwerte 4(DE)**
Erfinder: **Künzl, Dieter**
**Ringstrasse 29**
**D-5800 Hagen 8(DE)**
Erfinder: **Lichtenberger, Wolfgang**
**Schulgässchen 4**
**D-6070 Langen(DE)**

(74) Vertreter: **Patentanwälte Meinke und Dabringhaus Dipl.-Ing. J. Meinke Dipl.-Ing. W. Dabringhaus**
**Westenhellweg 67**
**D-4600 Dortmund 1(DE)**

(54) **Vorrichtung zur Bildung einer Übergabestelle in einem Fernmeldenetz.**

(57) Eine Vorrichtung zur Bildung einer Übergabestelle an einem Abschlußpunkt und/oder an einer Anschalteinrichtung eines Fernmeldenetzes mit einer elektronischen Schaltung, um über vom allgemeinen Netz auflaufende Impulse die Elektronik in einen Prüfabschlußzustand zu schalten, soll in ihrer Leistungsfähigkeit gesteigert und damit in ihrer Einsatzmöglichkeit vergrößert werden, ohne daß Vorteile bekannter Lösungen verhindert werden, wobei die Vorrichtung insbesondere eine eigene Überprüfung von Fehlern am Übergang des allgemeinen Netzes zum Endstellennetz möglich machen soll.

Dies wird dadurch erreicht, daß die elektronische Schaltung (11) zusätzlich als Prüfschaltung des Endstellennetzes (2) ausgebildet ist.

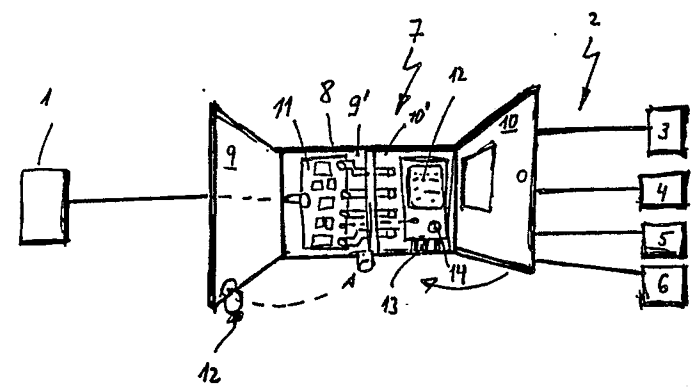


Fig. 1

Test circuit for Telecom interfaces

EP 0 370 423 A2

# Vorrichtung zur Bildung einer Übergabestelle in einem Fernmeldenetz

Die Erfindung richtet sich auf eine Vorrichtung zur Bildung einer Übergabestelle an einem Anschlußpunkt und/oder an einer Anschalteinrichtung eines Fernmeldenetzes mit einer elektronischen Schaltung, um über vom allgemeinen Netz auflaufende Impulse die Elektronik in einen Prüfabschlußzustand zu schalten.

Eine derartige Vorrichtung ist beispielsweise aus der internationalen Anmeldung WO 85/02740 bekannt, wobei diese Schaltung den Benutzer in die Lage versetzen soll, Fehler in der Übertragungsleitung zu ermitteln, und zwar in der Alternative, ob die Fehler auf der Netzseite oder aber auf der Benutzerseite liegen. Dabei kann z.B. von einer Postzentrale aus die Benutzerseite angesteuert werden und in gleicher Weise auch die Netzseite, wobei spannungsempfindliche Schalter zur Umschaltung vorgesehen sind.

Es ist auch bekannt, die Schaltungen so einzurichten, daß dann, wenn der Fehler beim Endverbraucher liegt, diesen automatisch vom Netz abzuschalten. Unterschiedliche Einrichtungen müssen dabei vorgesehen werden, je nach dem, welche Art der Vermittlungstechnik im Netz eingesetzt wird. So können Spannungsimpulse ausschließlich in Netzen angewendet werden, die mit einem elektromechanischen Ver mittlungssystem betrieben werden. Bei digitaler Vermittlungstechnik muß eine Frequenz als Impulsform benutzt werden, da die digitalen Vermittlungssysteme keine Möglichkeit bieten, mit Spannungsimpulsen zu arbeiten, die von der Betriebsspannung der jeweiligen Netze abweichen. Umgekehrt kann bei elektro-mechanischen Vermittlungssystemen eine Frequenz als Schaltimpuls nicht eingesetzt werden, da eine Beeinflussung durch außenstehende Dritte möglich wäre, die auf Frequenzen reagierende Schalteinrichtungen über entsprechende Frequenzen betätigen und beispielsweise in unerlaubter Weise einen Netzteilnehmer abschalten. Prüfverfahren vom Fernmeldeamt aus sind z.B. in der DE-32 40 660-A1, DE-33 11 400-A1 oder auch aus DE-36 09 979-A1 bekannt.

Sind die bekannten Einrichtungen jeweils nur zum Auf- und Zuschalten in den entsprechenden Betriebsweisen möglich, so besteht ein Wunsch danach, eine Vervielfältigung der Leistungsmöglichkeiten derartiger Vorrichtungen zu erreichen, wobei die bekannten Techniken gleichzeitig integrierbar sein sollen.

Aufgabe der Erfindung ist daher die Schaffung einer Lösung, mit der eine Vorrichtung der eingangs bezeichneten Art in ihrer Leistungsfähigkeit gesteigert und damit in ihrer Einsatzmöglichkeit vergrößert wird, ohne daß Vorteile bekannter Lösungen verhindert werden, wobei die Vorrich tung insbesondere eine eigene Überprüfung von Fehlern am Übergang des allgemeinen Netzes zum Endstellennetz möglich machen soll.

Mit einer Vorrichtung der eingangs bezeichneten Art wird diese Aufgabe gemäß der Erfindung dadurch gelöst, daß die elektronische Schaltung zusätzlich als Prüfschaltung des Endstellennetzes ausgebildet ist.

Diese Ausgestaltung der erfindungsgemäßen Vorrichtung bringt eine Fülle von Vorteilen mit sich. So kann direkt mit der Vorrichtung auch von der Fernmeldestelle aus eine präzise Fehlererkennung erfolgen, die Prüfschaltung des Endstellennetzes läßt z.B. erkennen, ob der Hörer eines Sprechapparates nicht aufgelegt ist, ob ein elektrischer Fehler im Endstellennetz vorliegt oder ob ein Endstellenapparat gar nicht angeschlossen ist und dgl. mehr. Je nach Art des Fehlers kann dann vom Fernmeldeamt aus der Endstellenteilnehmer abgeschaltet werden oder aber eine unmittelbare Fehlerbeseitigung ausgelöst werden.

Die Erfindung sieht in Ausgestaltung vor, daß die elektronische Schaltung mit einer Einrichtung zur Erkennung der jeweils anliegenden analogen bzw. digitalen Vermittlungstechnik ausgerüstet ist. Diese Gestaltung macht es möglich, daß die Vorrichtung unabhängig von der Art des jeweiligen Betriebssystemes eingesetzt werden kann, d.h. sie ist in vielfacher Hinsicht einzusetzen.

Vorteilhaft ist es, wenn die elektronische Schaltung wenigstens von außen wahlweise frequenz- oder spannungs-impulsbeaufschlagbar ist und/oder bei Auflaufen eines Steuerungssignales die Elektronik automatisch den benötigten Schaltzustand einnimmt.

Eine weitere Ausgestaltung der Erfindung besteht darin, daß die Elektronik bei Aktivierung eine Zeitstufe zuschaltet, die für eine vorbestimmte Zeit den Schaltweg freigibt, wobei sie bei fehlendem auflaufendem codierten Spannungsimpuls bzw. bei fehlender auflaufender codierter Frequenz die Elektronik in den unaktivierten Verbraucherzustand zurückschaltet.

Diese Möglichkeit kann u.a. dazu eingesetzt werden, unnötige Netzblockierungen zu vermeiden, beispielsweise durch die Aktivierung von Seiten des Gabelumschalters eines Telefonapparates. Ist dieser über einen vorbestimmten Zeitraum hinaus aktiviert, ohne daß ein Wählimpuls folgt, kann die erfindungsgemäße Elektronik den Apparat vom Netz abschalten. Bei Betätigung des Gabelumschalters kann die Einrichtung so getroffen sein, daß die Prüfschaltung die Trennung automatisch wieder aufhebt.

Um einen möglichst störungsfreien Betrieb zu ermöglichen, sieht die Erfindung auch vor, daß die Elektronik mit einer eigenen netzunabhängigen Spannungsversorgung versehen ist, die im Störfalle die Elektronik von einer externen Spannungsversorgung unabhängig macht, wobei die Versorgung beispielsweise als gepufferte, vom Einspeisenetz her unabhängige Batterie ausgebildet sein kann.

Vorteilhaft ist es, wenn die Elektronik zur Erkennung des Aktivierungszustandes der Teilnehmereinrichtung ausgestaltet ist und/oder bei Erkennung eines Fehlers im Bereich der Teilnehmereinrichtung diese Schaltungsseite abschaltet, periodisch die abgeschaltete Seite überprüft und bei Aufhebung der Fehlermeldung die Schaltungsseite selbständig in den gewünschten Benutzungszustand zurückschaltet und/oder daß die Elektronik mit einer fernaktivierbaren Gebührensperre ausgerüstet ist.

Die Elektronik ist dabei so ausgestaltet, daß sie zeitabhängig die Fernmeldeeinheit auf den Wählton, die Wahl, die Rufquittung, den Besetztton und oder die Sprache überwacht und bei Nichterkennung eines Signales oder bei Überschreiten eines vorbestimmten Zeitrahmens die Amtsleitung freischaltet. Damit wird verhindert, daß z.B. durch Simulation eines Anrufes, etwa durch das Wählen nur zweier Nummern und das Beiseitelegen des Hörers eine Amtsleitung über Gebühr blockiert wird. Nach Überschreiten eines Zeitraumes ohne Signalempfang schaltet die Elektronik dann nämlich die Leitung wieder frei.

Zweckmäßig ist es, wenn die Elektronik einen integralen Bestandteil im Gehäuse eines den Abschlußpunkt des allgemeinen Netzes bildenden Schaltkastens und/oder der Anschalteinrichtung einer Endstelle bildet, wobei die Elektronik in Ausgestaltung in einem Gehäuse untergebracht ist, welches zur Trennung des allgemeinen Netzes und des Endstellennetzes mit plombierbaren unterschiedlichen Gehäusebereichen ausgestaltet ist.

Das Gehäuse kann dabei so gestaltet sein, daß die Elektronik und die Netzzuführung im Bereich des gesicherten ggf. plombierten Postbereiches dieses Gehäuses untergebracht ist, wobei plombierbare Gehäuse für sich gesehen bekannt sind.

Neben anderen weiteren Ausgestaltungen sieht die Erfindung auch vor, daß das Gehäuse mit einem Prüfanschluß für das oder die Endstellennetze ausgerüstet ist, wobei die den Prüfanschluß beaufschlagende Elektronik durch Prüfroutinen dem Benutzer ein Fehlererkennungssignal liefert und/oder den Fehler durch optische oder akustische Anzeige kenntlich macht.

Eine weitere Ausgestaltung der Erfindung besteht darin, daß bei einer Mehrzahl von Endstellennetzanschlüssen im mit der Elektronik ausgerüsteten Abschlußgehäuse des allgemeinen Netzes die Endstellennetzanschlüsse modulartig in das Gehäuse einsetzbar und die Elektronik für eine Prüfroutine dem Prüfausgang des jeweils gewünschten Endstellennetzanschlußmoduls zuschaltbar ausgebildet sind.

Die Erfindung ist nachstehend anhand der Zeichnung beispielsweise näher erläutert. Diese zeigt in

Fig. 1 eine Prinzipskizze eines Endstellennetzanschlusses und in

Fig. 2 ein Prinzipschaltbild des Endstellennetzanschlusses.

In Fig. 1 ist andeutungsweise ein Netzknoten 1 eines Fernmeldenetzes dargestellt sowie ein allgemein mit 2 bezeichnetes Endstellennetz mit einer Mehrzahl von Endstellennetzanschlüssen, die die Bezugszeichen 3 bis 6 tragen. Zwischen dem durch den Netzknoten 1 symbolisierten allgemeinen Netz und dem Endstellennetz ist als Übergabepunkt die mit 7 bezeichnete Vorrichtung auch symbolisch wiedergegeben, und zwar als zweigeteiltes Gehäuse 8 mit je einem Gehäusedeckel 9 bzw. 10.

Die Besonderheit besteht hier darin, daß im vom Gehäusedeckel 9 abgeschlossenen Gehäuseteil 9′ eine Elektronik 11 mit den oben beschriebenen Merkmalen untergebracht ist, wobei der Bereich der Elektronik 11 über dem Gehäusedeckel 9 verschlossen und mittels einer angedeuteten Plombe 12 plombiert werden kann.

Symbolisch dargestellt ist im rechten Gehäuseteil 10′ eine Anzeigeeinheit 12, die von der Elektronik 11 beaufschlagbar ist und die Fehlermeldungen oder sonstige Betriebszustände für den Benutzer kenntlich machen kann. Mit 13 sollen andeutungsweise einige Batterien dargestellt sein, die die Elektronik 11 von einer Netzeinspeisung unabhängig machen. Ein Prüfanschluß zur Überprüfung des Endstellennetzes 2 durch den jeweiligen Benutzer oder einem Monteur ist angedeutet und mit 14 bezeichnet, er sollte sich in dem Gehäuseteil 10′ befinden.

In Fig. 2 ist mit 11 die Elektronikplatine bezeichnet, die alle wesentlichen Funktionselemente, trägt für eine optische Anzeigeeinheit 12 z.B. eine LED mit einem Aktivierungsschalter 15, der beispielsweise bei Öffnen des Gehäuses aktiviert werden kann, mit gepufferten Batterien 13 sowie mit dem Prüfanschluß 14. Neben diesen Elementen ist auf der Elektronik 11 dem Pufferbatterien zugeordnet ein Spannungswandler 16 angeordnet, ein von dem Betreiber der Anlage, z.B. der Post, fernaktivierbarer Gebührenschalter 17 und eine Steuereinheit 18 mit den nachfolgend wiedergegebenen Funktionen.

Zunächst sei zu dem Gebührensperrschalter 17 ausgeführt, daß dieser von der Post dann geschaltet werden kann, wenn beispielsweise die Telefongebühren des Benutzers nicht bezahlt sind, wobei dies in der Weise ausgelegt ist, daß der Schalter 19 zu einer Schleife geschlossen wird, wenn vom Telefongerät aus gewählt wird. Dies bedeutet, daß zwar der Telefonbenutzer jederzeit angerufen werden kann, selbst kann er aber keine gebührenerzeugende Gespräche führen.

Die Steuereinheit weist neben anderen Funktionselementen einen Analog-Digitalwandler 20 auf, einen Port 21 als Signaleingang/-ausgang, einen Mikroprozessor 22, einen RAM 23 und einen ROM 24, ohne daß die Erfindung hierauf beschränkt wäre. Selbstverständlich könnten die Elemente 22 bis 24 auch als Mikrocontroler ausgebildet sein, die einen RAM und einen ROM enthalten. Zusätzlich ist ein Schaltrelais 25 vorhanden, das ggf. eingesetzt werden kann, um Fehler auf der Benutzerseite zu ermitteln.

Mit S1 ist eine Sensorleitung für Potential-/ bzw. Polaritätsverhältnisse auf der Anschlußleitung bezeichnet, mit S2 eine Steuerleitung für ein S-Relais für Gebührensperre bzw. -schleife und mit S3 eine Sensorleitung für das Relais 25, beispielsweise zum Ab- bzw. Anschalten der End stelle bei vorliegenden Fehlern bzw. bei Fehlerbeseitigung.

Erkennbar wird der Benutzer der Erfindung in die Lage versetzt, in seinem eigenen Bereich Fehler zu orten. So kann beispielsweise der Telefonapparat 2 nach Öffnen der Vorrichtung in den Prüfstecker 14 eingesteckt werden. Läßt sich von hier aus telefonieren, ist gewährleistet, daß die Amtsleitung bis zum Prüfstecker 14 keine Fehler aufweist. Zusätzliche Informationen können beispielsweise über die LED-Anzeige 12 dem Benutzer übermittelt werden, etwa in der Weise, daß zwar nicht telefoniert werden kann, aber ein unmittelbarer Fehler im Telefongerät 2 optisch angezeigt wird, z.B. bei Erkennung eines Kurzschlusses od. dgl., was auch über die Relaisschaltung 25 mittels des Mikroprozessors 22 erfolgt. Die Einrichtung kann dabei so getroffen sein, daß bei Öffnen des Gehäuses 8 automatisch eine Prüfroutine erfolgt, wobei dann dem Benutzer optisch oder akkustisch, z.B. über die LED 12, der Zustand der Amtsleitung angezeigt wird, etwa, ob diese fehlerfrei ist oder nicht. Ist sie nicht fehlerfrei, kann automatisch sofort dem Benutzer angezeigt werden, ob beispielsweise amtsseitig eine Gebührensperre gesetzt wurde oder ob es sich um einen anderen Fehler in den Amtsleitung handelt.

## Ansprüche

1. Vorrichtung zur Bildung einer Übergabestelle an einem Abschlußpunkt und/oder an einer Anschalteinrichtung eines Fernmeldenetzes mit einer elektronischen Schaltung, um über vom allgemeinen Netz auflaufende Impulse die Elektronik in einen Prüfabschlußzustand zu schalten,
dadurch gekennzeichnet,
daß die elektronische Schaltung (11) zusätzlich als Prüfschaltung des Endstellennetzes (2) ausgebildet ist.

2. Vorrichtung nach Anspruch 1,
dadurch gekennzeichnet,
daß die elektronische Schaltung (11) mit einer Einrichtung zur Erkennung der jeweils anliegenden analogen bzw. digitalen Vermittlungstechnik ausgerüstet ist.

3. Vorrichtung nach Anspruch 1 oder 2,
dadurch gekennzeichnet,
daß die elektronische Schaltung (11) wenigstens von außen wahlweise frequenz- oder spannungsimpuls-beaufschlagbar ist und/oder daß bei Auflaufen eines Steuerungssignales die Elektronik (11) automatisch den benötigen Schaltzustand einnimmt.

4. Vorrichtung nach einem der vorangehenden Ansprüche,
dadurch gekennzeichnet,
daß die Elektronik (11) bei Aktivierung eine Zeitstufe zuschaltet, die für eine vorbestimmte Zeit den Schaltweg freigibt, wobei sie bei fehlendem auflaufendem codierten Spannungsimpuls bzw. bei fehlender auflaufender codierter Frequenz die Elektronik in den unaktivierten Verbraucherzustand zurückschaltet.

5. Vorrichtung nach einem der vorangehenden Ansprüche,
dadurch gekennzeichnet,
daß die Elektronik (11) mit einer eigenen netzunabhängigen Spannungsversorgung versehen ist, die im Störfalle die Elektronik von einer externen Spannungsversorgung unabhängig macht und/oder daß die Versorgung als vom Einspeisenetz her gepufferte unabhängige Batterie (13) ausgebildet ist.

6. Vorrichtung nach einem der vorangehenden Ansprüche,
dadurch gekennzeichnet,
daß die Elektronik (11) zur Erkennung des Aktivierungszustandes der Teilnehmereinrichtung ausgestaltet ist, und/oder daß die Elektronik (11) bei Erkennung eines Fehlers im Bereich der Teilnehmereinrichtung diese Schaltungsseite abschaltet, periodisch die abgeschaltete Seite überprüft und bei Aufhebung der Fehlermeldung die Schaltungsseite selbstständig in den gewünschten Benutzungszustand zurückschaltet und/oder daß die Elektronik (11) mit einer fernak tivierbaren Gebührensperre ausgerüstet ist.

7. Vorrichtung nach einem der vorangehenden Ansprüche,
dadurch gekennzeichnet,
daß die Elektronik (11) den integralen Bestandteil im Gehäuse (8) eines den Abschlußpunkt des allgemeinen Netzes (1) bildenden Schaltkastens und/oder der Anschalteinrichtung einer Endstelle (2) bildet.

8. Vorrichtung nach einem der vorangehenden Ansprüche,
dadurch gekennzeichnet,
daß die Elektronik (11) in einem Gehäuse (8) untergebracht ist, welches zur Trennung des allgemeinen Netzes und des Endstellennetzes mit plombierbaren unterschiedlichen Gehäusebereichen ausgestaltet ist.

9. Vorrichtung nach einem der vorangehenden Ansprüche,
dadurch gekennzeichnet,
daß die Elektronik (11) in einem Gehäuse (8) untergebracht ist, das als Kommunikationsübergabepunkt mit Fernsprechkabel-, Breitband-Kabel- (BK-Kabel) und Glasfaser-Kabelanschluß (GF-Kabelanschluß) ausgerüstet ist.

10. Vorrichtung nach einem der vorangehenden Ansprüche,
dadurch gekennzeichnet,
daß das Gehäuse (8) mit einem Prüfanschluß (14) für das oder die Endstellennetze (2) ausgerüstet ist, wobei die den Prüfanschluß beaufschlagende Elektronik (11) durch Prüfroutinen dem Benutzer ein Fehlererkennungssignal liefert und/oder den Fehler durch optische oder akustische Anzeige kenntlich macht.

11. Vorrichtung nach einem der vorangehenden Ansprüche,
dadurch gekennzeichnet,
daß bei einer Mehrzahl von Endstellennetzanschlüssen (3-6) im mit der Elektronik (11) ausgerüsteten Abschlußgehäuse (9′) des allgemeinen Netzes die Endstellennetzanschlüsse modulartig in das Gehäuse (8) einsetzbar und die Elektronik für eine Prüfroutine dem Prüfausgang des jeweils gewünschten Endstellennetzanschlußmoduls zuschaltbar ausgebildet sind.

Test circuit for Telecom interfaces

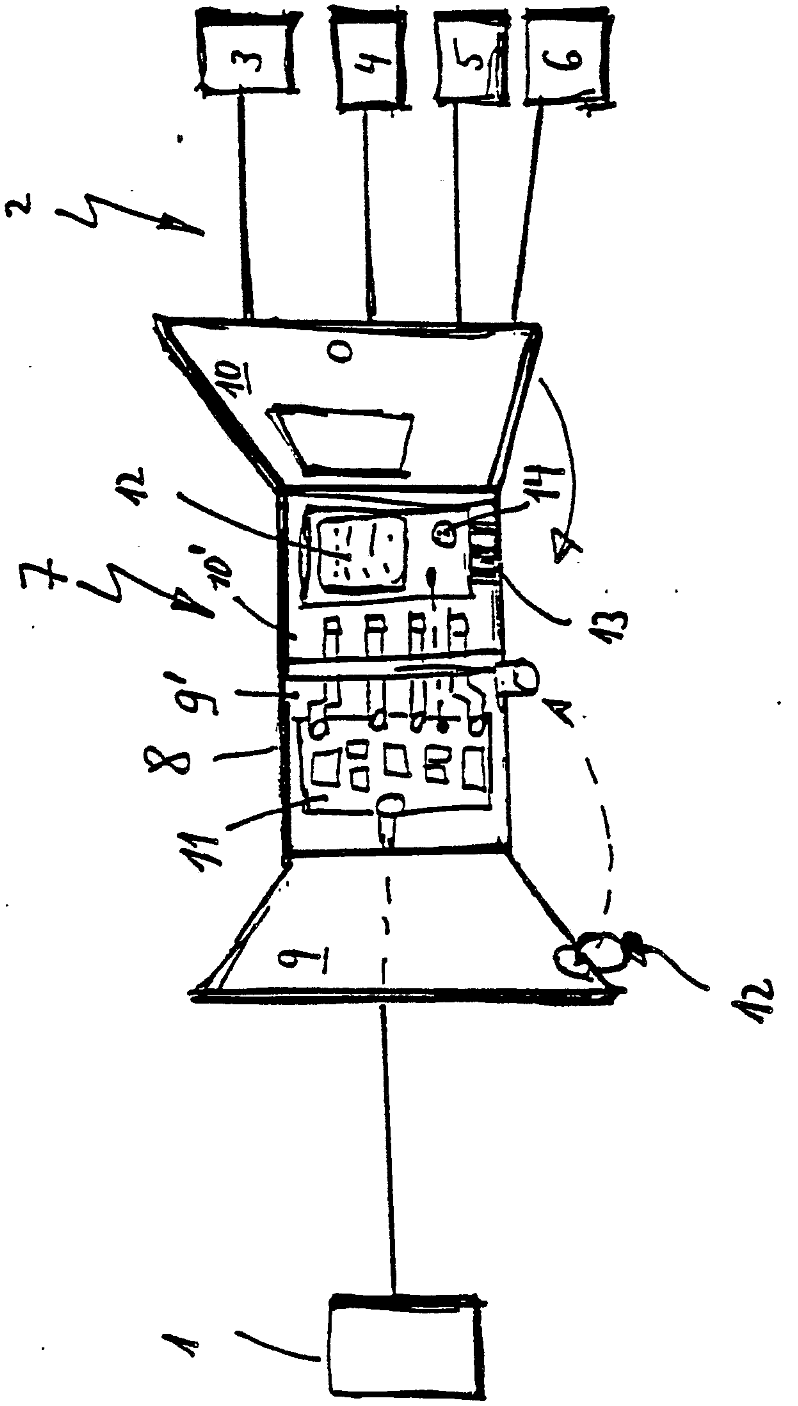


Fig. 1

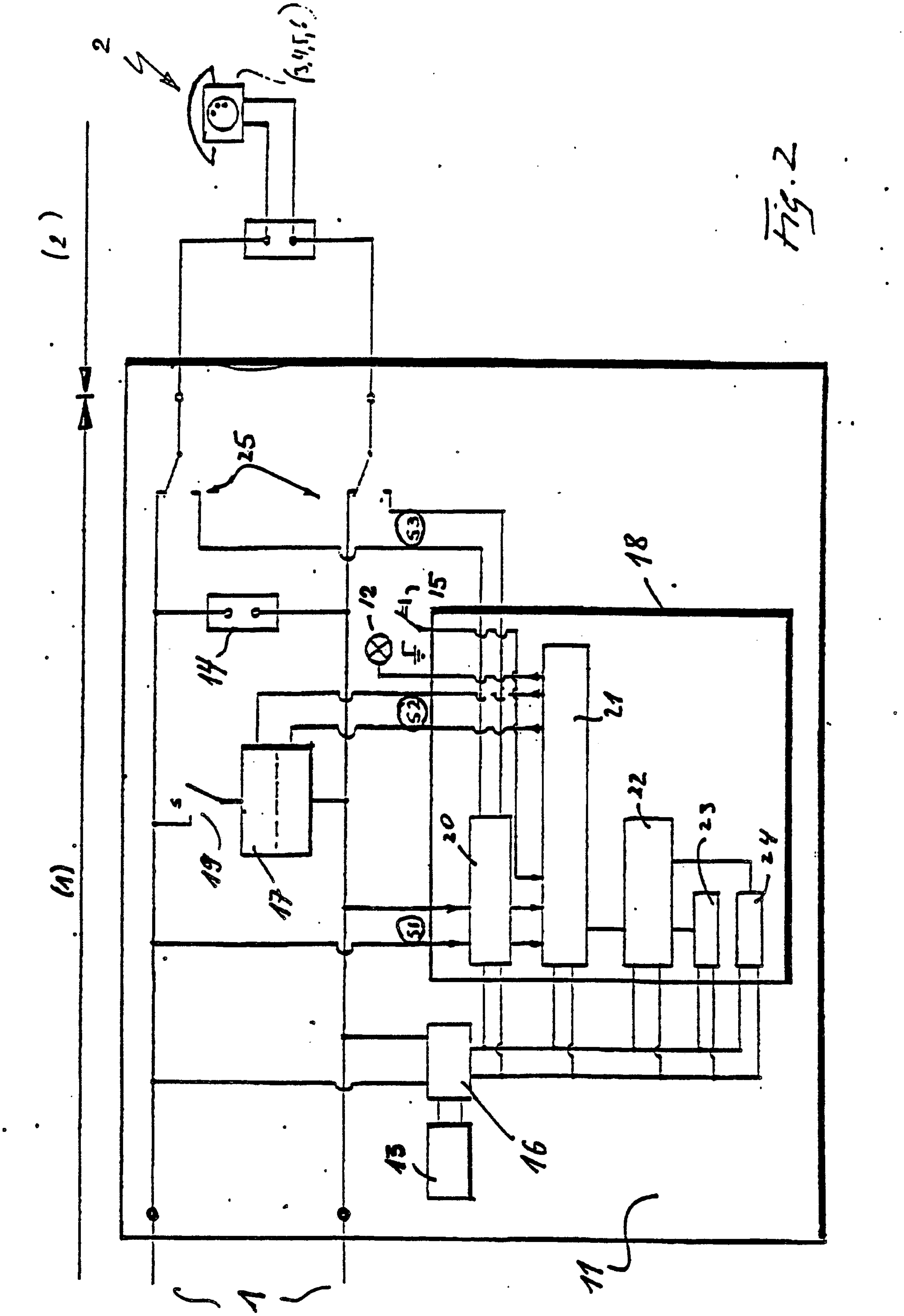


Fig. 2